# EUROPÄISCHE PATENTSCHRIFT

(11) **EP 1 376 822 B1**
(45) Veröffentlichungstag und Bekanntmachung des Hinweises auf die Patenterteilung: **28.11.2007**
(21) Anmeldenummer: 03011913.5
(22) Anmeldetag: 27.05.2003
(51) Int. Cl.: H02K 5/128, H02K 3/487

(54) **Elektromotor mit einem mehrpoligen Rotor und einem mehrpoligen Stator**
Electric motor comprising a multipolar rotor and a multipolar stator
Moteur electrique comprenant un rotor multipolaire et un stator multipolaire

(30) Priorität: 17.06.2002 DE 10226976
(43) Veröffentlichungstag der Anmeldung: 02.01.2004
(73) Patentinhaber: Siemens VDO Automotive AG, 93055 Regensburg (DE)
(72) Erfinder: Reimann, Christian, 61273 Wehrheim (DE)

(56) Entgegenhaltungen:
- WO-A-01/84690
- BE-A- 756 853
- GB-A- 2 345 387
- US-A- 4 227 108

## Beschreibung

Die Erfindung bezieht sich auf einen Elektromotor mit einem mehrpoligen Rotor und einem mehrpoligen Stator und einer dazwischen angeordneten Isolierhülse gemäß dem Oberbegriff des Anspruches 1. Beispiele für solche Elektromotoren finden sich in der DE 195 34 179 A und der DE 1 763 760. Elektromotoren sind bekannt. In der DE 198 46 498 A1 wird ein Elektromotor, insbesondere ein bürstenloser Gleichstrommotor, beschrieben, der einen mehrpoligen Rotor und einen mehrpoligen Stator aufweist. Bei diesem Elektromotor sind die Statorpole an der zum Rotor weisenden Seite mittels eines Isoliermittels miteinander verbunden und an ihrer dem Rotor abgeneigten Seite mit Abstand zueinander angeordnet. Das Isoliermittel dient dazu, den magnetischen Fluss zwischen den Statorpolen weitgehend zu vermindern. Das Isoliermittel kann dabei als Formteil ausgeführt sein. Häufig ist es jedoch vorgesehen, die Elektromotoren in einem flüssigen Medium einzusetzen, wobei das flüssige Medium in den Elektromotor eindringt, was zu Schädigungen und Nachteilen im Betrieb führt.

Aus der BE 756 853 und der US 4,227,108 sind Elektromotoren mit Isolierhülsen aus Kunststoff bekannt. Diese benötigen mehrere Dichtungen, um den Statorraum sicher abzudichten. Aus der WO 01/84690 A2 ist ein Elektromotor bekannt, dessen Rotor in einer Fluidkammer liegt. Eine spezielle, aufwändige Form soll die Kühlung des Stators verbessern. Schwierig ist bei allen vorbekannten Lösungen die Lagerung des Rotors bei gleichzeitig sicherer Abdichtung des Statorraumes.

Der Erfindung liegt daher die Aufgabe zugrunde, einen Elektromotor zu schaffen, der relativ problemlos in einem flüssigen Medium betrieben werden kann, wobei die Isolierhülse besser fixiert ist.

Die der Erfindung zugrunde liegende Aufgabe wird durch einen Elektromotor mit den Merkmalen des beigefügten Anspruches 1 gelöst. Als Elektromotor eignet sich dabei ein Synchron- oder Asynchronmotor sowie ein bürstenloser Gleichstrommotor. Der Rotor ist dabei auf einer Rotorwelle gelagert. Die Isolierhülse ist starr ausgeführt, bleibt also in ihrer Form stabil. Sie besteht aus Kunststoff und hat eine Wanddicke von 0,5 bis 1 mm. Jeweils ein Vorsprung ist zwischen zwei benachbart angeordneten Statorpolen angeordnet. Dadurch wird die Isolierhülse mechanisch verstärkt und eine kompakte Fixierung erreicht. Dabei ist es vorteilhaft, dass lediglich der Rotor mit dem flüssigen Medium in Kontakt gerät, eine Kontaktierung des flüssigen Mediums mit dem Stator jedoch vermieden wird. Eine Schädigung des Elektromotors durch das flüssige Medium, das mit dem Rotor kontaktiert wird, wird somit auf relativ einfache Weise vermieden.

Gemäß der Erfindung ist die Isolierhülse an ihrem einen Ende mit dem Gehäuse des Elektromotors verbunden. Der Elektromotor kann dadurch in besonders vorteilhafter Weise kompakt ausgebildet werden, und die Isolierhülse erfährt eine zusätzliche Fixierung. Weiterhin ist die Isolierhülse erfindungsgemäß an ihrem anderen Ende becherförmig gestaltet. Auf diese Weise wird die Lagerung der Isolierhülse an der Rotorwelle vereinfacht.

Ein bevorzugte Ausgestaltung der Erfindung besteht darin, dass die Vorsprünge durchgehend über die Länge des Stators verlaufen. Dadurch wird die Baueinheit, bestehend aus Stator und Isolierhülse besonders stabil gestaltet.

Gemäß einer weiteren bevorzugten Ausgestaltung der Erfindung weisen die Vorsprünge einen T-förmigen Querschnitt auf. Dadurch läßt sich eine besonders stabile Verbindung der Isolierhülse mit dem Stator erreichen.

Nach einer weiteren Ausgestaltung der Erfindung sind die Vorsprünge als Fixierung für die Statorpole ausgebildet. Dies wird durch eine Verbreiterung des T-förmigen Querschnitts der einzelnen Vorsprünge erreicht. Dadurch wird in vorteilhafter Weise eine Fixierung für die Statorpole geschaffen, die sich dadurch vereinfacht im Stator des Elektromotors aufbringen lassen.

Eine weitere Ausgestaltung der Erfindung besteht darin, dass die Isolierhülse direkt an der Rotorwelle anliegt. Die Isolierhülse erfüllt dann zusätzlich in vorteilhafter Weise die Funktion eines Lagers für die Rotorwelle.

Nach einer weiteren Ausgestaltung der Erfindung ist zwischen der Isolierhülse und der Rotorwelle ein Lager angeordnet. Dies verbessert in vorteilhafter Weise die Betriebsbedingungen in denjenigen Fällen, wo relativ hohe Drücke des flüssigen Mediums zu verzeichnen sind, da die Isolierhülse so eine höhere Stabilität erfährt.

Gemäß einer weiteren bevorzugten Ausgestaltung der Erfindung sind die Statorpole und der Rückschlußring als Einzelteil angeordnet. Die Statorpole und der Rückschlußring, die zusammen den eigentlichen Stator bilden, läßt sich somit in vorteilhafter Weise auf relativ einfachem Wege herstellen.

Die Erfindung wird nachfolgend anhand der Zeichnung (Fig. 1 bis Fig. 5) näher und beispielhaft erläutert.

Fig. 1 zeigt den Elektromotor im Querschnitt.

Fig. 2 zeigt den Elektromotor im Längsschnitt gemäß Schnitt A-A in Fig. 1.

Fig. 3 zeigt einen weiteren Elektromotor im Längsschnitt gemäß Schnitt A-A in Fig. 1.

Fig. 4 zeigt einen Teilbereich des Elektromotors im Querschnitt mit einer speziellen Form der Vorsprünge.

Fig. 5 zeigt einen Teilbereich des Elektromotors im Querschnitt mit einer weiteren alternativen Ausgestaltung der Vorsprünge.

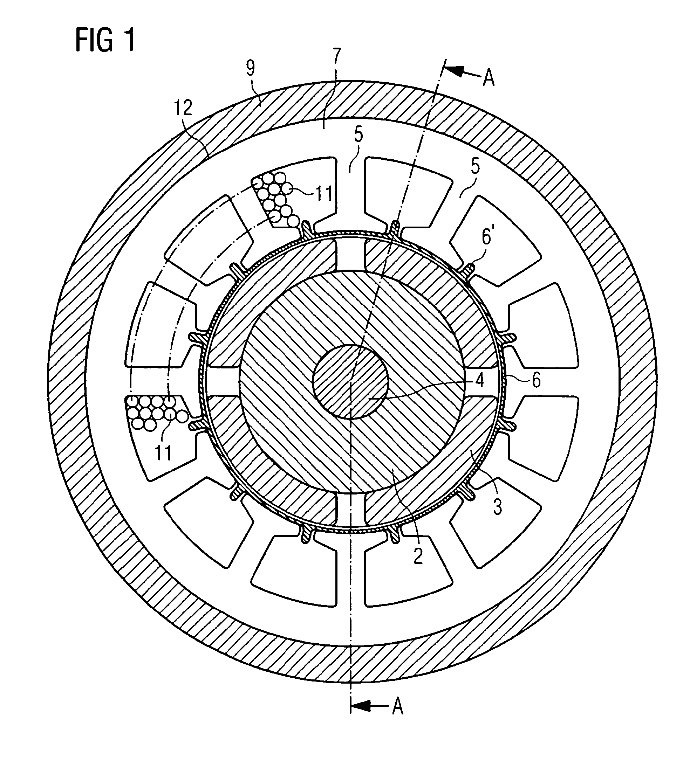

In Fig. 1 ist der Elektromotor 1 mit einem mehrpoligen Rotor 2 und einem mehrpoligen Stator 12 mit von Statorwicklungen 11 umgebenen, radial zum Rotor 2 weisenden Statorpolen 5 dargestellt. Die Statorpole 5 und der Rückschlußring 7 bilden zusammen den Stator 12 und sind als Einzelteil gefertigt. Zwischen dem Stator 12 und dem Rotor 2 ist eine sich über die Länge des Rotors 2 hinaus erstreckende, starre Isolierhülse 6 angeordnet, die radial zum Rotor 2 angeordnete Vorsprünge 6' aufweist, wobei jeweils ein Vorsprung 6' zwischen zwei benachbart angeordnete Statorpole 5 angeordnet ist. Vorsprünge 6' haben einen nahezu rechteckigen Querschnitt. Der Rotor 2 ist auf der Rotorwelle 4 angeordnet. Um den Rückschlußring 7 befindet sich das Gehäuse 9 des Elektromotors 1. Aus Gründen der Übersichtlichkeit ist lediglich nur eine Statorwicklung 11 dargestellt worden. Ferner sind aus Gründen der besseren Übersicht die Statorpole 5 sowie der Rückschlußring 7 unschraffiert dargestellt. Zwischen der Isolierhülse 6 und dem Rotor 2 sind die Magnetschalen 3 auf dem Rotor 2 angeordnet. Der Rotor 2 kann problemlos in einem flüssigen Medium betrieben werden, das infolge der Anordnung der Isolierhülse 6 nicht in dem Bereich des Stators 12 gelangen kann.

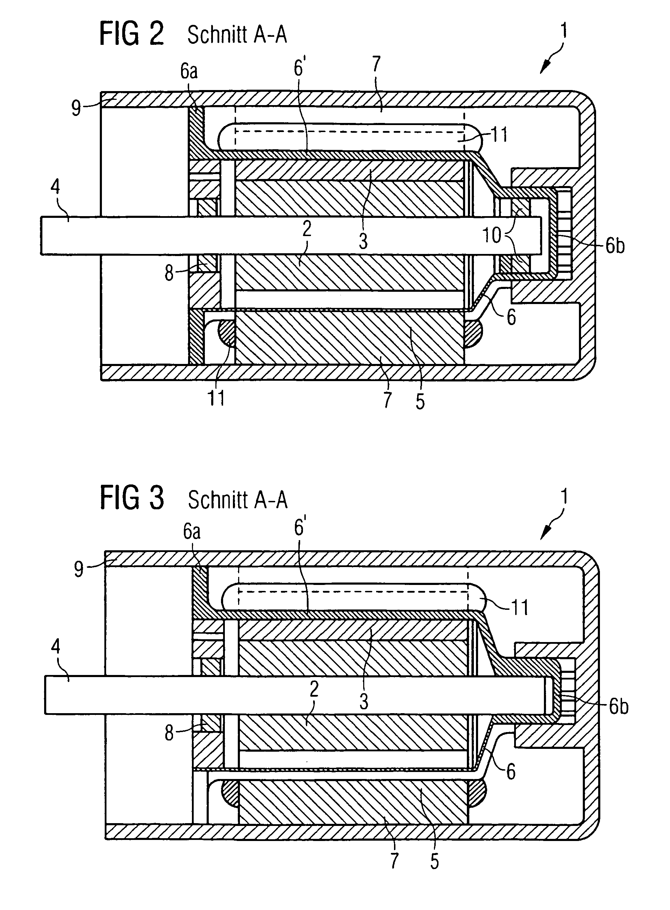

In Fig. 2 ist der Elektromotor 1 im Längsschnitt dargestellt. Die Isolierhülle 6 ist an ihrem einen Ende 6a mit dem Gehäuse 9 des Elektromotors 1 verbunden, was sich vorteilhaft auf die Fixierung der Isolierhülse 6 auswirkt. An ihrem anderen Ende 6b ist die Isolierhülse 6 fächerförmig gestaltet. Dies wirkt sich ebenfalls vorteilhaft auf die Fixierung der Isolierhülse 6 aus. Zwischen der Isolierhülse 6 und der Rotorwelle 4 ist ein Lager 10 angeordnet, was besonders dann vorteilhaft ist, wenn der Druck des flüssigen Mediums besonders groß ist und besonders hohe mechanische Ansprüche an die Isolierhülse 6 gestellt werden müssen. Das entsprechende Gegenlager 8 ist auf der anderen Seite im sogenannten Lagerschild fixiert. Die Statorpole 5 und der Rückschlußring 7 sind hierbei als Einzelteile gefertigt und liegen am Gehäuse 9 des Elektromotors 1 an.

In Fig. 3 ist eine weitere Ausgestaltung des Elektromotors 1 im Querschnitt dargestellt. Im Gegensatz zu der in Fig. 2 dargestellten Variante liegt die Isolierhülse 6 direkt an der Rotorwelle 4 an. Die Isolierhülse 6 übernimmt somit neben der Funktion der Isolierung des Stators vom flüssigen Medium (nicht dargestellt) noch zusätzlich die Funktion des Lagers. Auf die Anordnung eines Lagers kann somit in vorteilhafter Weise verzichtet werden, was besonders dann möglich ist, wenn das flüssige Medium nicht oder kaum unter Druck steht.

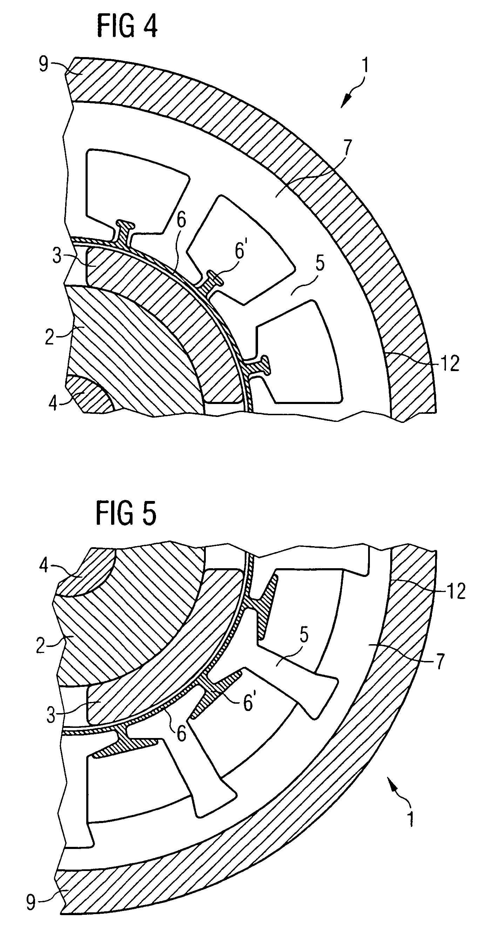

In Fig. 4 ist ein Teilbereich des Elektromotors 1 im Querschnitt dargestellt. Die Vorsprünge 6' weisen einen T-förmigen Querschnitt auf, was sich besonders vorteilhaft auf die mechanische Stabilität der Isolierhülse 6 auswirkt. Die Statorpole 5 und der Rückschlußring 7 sind hierbei ebenfalls als Einzelteil angeordnet.

In Fig. 5 ist ein Teilbereich des Elektromotors 1 im Querschnitt dargestellt, bei dem die Vorsprünge 6' mit den T-förmigen Querschnitt als Auflage für die Statorpole 5 dienen. Dies wird durch eine Verbreiterung des T-förmigen Querschnitts erreicht. Diese Ausgestaltung der Vorsprünge 6` wirkt sich darüber hinaus vorteilhaft auf die Fixierung der Isolierhülse 6 an den Statorpolen 5 aus und verbessert gleichzeitig die Stabilität der Isolierhülse 6. Ferner wird die Fixierung der Statorpole 5 im Rückschlußring 7 erleichtert. Statorpole 5 und Rückschlußring 7 sind dabei nicht als Einzelteil gefertigt.

## Patentansprüche

1. Elektromotor (1) mit einem mehrpoligen Rotor (2) und einem mehrpoligen Stator (12) mit von Statorwicklungen (11) umgebenen, radial zum Rotor (2) weisenden Statorpolen (5), bei dem zwischen dem Stator (12) und dem Rotor (2) eine sich mindestens über die Länge des Rotors (2) erstreckende, starre Isolierhülse (6) angeordnet ist, wobei die Isolierhülse (6) an ihrem einen Ende (6a) mit einem Gehäuse (9) des Elektromotors (1) verbunden ist, das um einen Rückschlussring des Stators (12) angeordnet ist, und die Isolierhülse an ihrem anderen Ende (6b) becherförmig gestaltet ist, wobei das Gehäuse (9) einen Gehäuseboden aufweist, der an Seiner Innerseite eine Aufnahme aufweist, wobei das andere Ende (6b) der Isolierhülse (6) in die Aufnahme der Gehäusebodens hineinragt, **dadurch gekennzeichnet, dass** die Isolierhülse (6) aus Kunststoff besteht und radial zum Rotor (2) angeordnete Vorsprünge (6') aufweist, wobei jeweils ein Vorsprung (6') zwischen zwei benachbart angeordneten Statorpolen (5) angeordnet ist, wobei die Aufnahme des Gehäusebodens Nuten aufweist, in die die Vorsprünge (6') eingreifen.

2. Elektromotor (1) nach Anspruch 1, bei dem die Vorsprünge (6') durchgehend über die Länge des Stators (12) verlaufen.

3. Elektromotor (1) nach Anspruch 1 oder Anspruch 2, bei dem die Vorsprünge (6') einen T-förmigen Querschnitt aufweisen.

4. Elektromotor (1) nach Anspruch 3, bei dem die Vorsprünge (6') als Fixierung für die Statorpole (5) ausgebildet sind.

5. Elektromotor (1) nach einem der Ansprüche 1 bis 4, bei dem die Isolierhülse (6) direkt an der Rotorwelle (4) anliegt.

6. Elektromotor (1) nach einem der Ansprüche 1 bis 4, bei dem zwischen der Isolierhülse (6) und der Rotorwelle (4) ein Lager (10) angeordnet ist.

7. Elektromotor (1) nach einem der Ansprüche 1 bis 6, bei dem die Statorpole (5) und der Rückschlußring (7) als Einzelteil angeordnet sind.

## Claims

1. Electric motor (1) having a multipole rotor (2) and a multipole stator (12) having stator poles (5) radially facing the rotor (2) and surrounded by stator windings (11), in which a rigid insulating sleeve (6), which extends at least over the length of the rotor (2) is arranged between the stator (12) and the rotor (2), the insulating sleeve (6) being connected at one of its ends (6a) to a casing (9) of the electric motor (1) which is arranged around a magnetic return path ring of the stator (12), and the insulating sleeve (6) being in the form of a cup at the other of its ends (6b), the casing (9) having a casing base, which has a receptacle on its inner side, the other end (6b) of the insulating sleeve (6) protruding into the receptacle of the housing base, **characterized in that** the insulating sleeve (6) is made of plastic and has projections (6') arranged radially with respect to the rotor (2), in each case one projection (6') being arranged between two adjacent stator poles (5), the receptacle of the casing base having grooves in which the projections (6') engage.

2. Electric motor (1) according to Claim 1, in which the projections (6') run continuously over the length of the stator (12).

3. Electric motor (1) according to Claim 1 or Claim 2, in which the projections (6') have a T-shaped cross section.

4. Electric motor (1) according to Claim 3, in which the projections (6') are formed for the purpose of fixing the stator poles (5).

5. Electric motor (1) according to one of Claims 1 to 4, in which the insulating sleeve (6) bears directly against the rotor shaft (4).

6. Electric motor (1) according to one of Claims 1 to 4, in which a bearing (10) is arranged between the insulating sleeve (6) and the rotor shaft (4).

7. Electric motor (1) according to one of Claims 1 to 6, in which the stator poles (5) and the magnetic return path ring (7) are provided as an individual part.

## Revendications

1. Moteur électrique (1) comportant un rotor multipolaire (2) et un stator multipolaire (12), lui-même comportant des pôles de stator (5) tournés dans le sens radial vers le rotor (2) et entourés par des enroulements de stator (11), ledit moteur électrique (1) comportant, intercalée entre le stator (12) et le rotor (2), une douille isolante rigide (6) s'étendant au moins sur toute la longueur du rotor (2), où ladite douille isolante (6) est liée à l'une de ses extrémités (6a) à un boîtier (9) du moteur électrique (1), lequel boîtier est disposé autour d'une bague fermant le circuit magnétique du stator (12), et où la douille isolante est en forme de pot à son autre extrémité (6b), où le boîtier (9) a un fond qui comporte sur sa face intérieure un logement, où l'autre extrémité (6b) de la douille isolante (6) fait saillie dans le logement du fond du boîtier, **caractérisé par le fait que** la douille isolante (6) est en matière plastique et comporte des nervures (6') disposées dans le sens radial par rapport au rotor (2), chaque nervure (6') étant disposée entre deux pôles de stators (5) voisins, où le logement du fond du boîtier comporte des rainures, dans lesquelles s'engagent les nervures (6').

2. Moteur électrique (1) selon la revendication 1, où les nervures (6') s'étendent d'une façon continue sur toute la longueur du stator (12).

3. Moteur électrique (1) selon la revendication 1 ou la revendication 2, où les nervures (6') ont une section transversale en T.

4. Moteur électrique (1) selon la revendication 3, où les nervures (6') sont configurées pour assurer la fixation des pôles de stator (5).

5. Moteur électrique (1) selon l'une des revendications 1 à 4, où la douille isolante (6) est appliquée directement sur l'arbre du rotor (4).

6. Moteur électrique (1) selon l'une des revendications 1 à 4, où un palier (10) est disposé entre la douille isolante (6) et l'arbre du rotor (4).

7. Moteur électrique (1) selon l'une des revendications 1 à 6, où les pôles de stator (5) et la bague (7) fermant le circuit magnétique sont disposés en tant que pièces individuelles.
